# EUROPEAN PATENT SPECIFICATION

(11) **EP 3 381 631 B1**
(45) Date of publication and mention of the grant of the patent: **27.11.2019**
(21) Application number: 18159769.1
(22) Date of filing: 02.03.2018
(51) Int. Cl.: B26D 1/02, B26D 3/26, B26D 7/06, B26D 5/00, B26D 3/24, B26D 3/18, B26D 7/00

(54) **A MACHINE FOR CUTTING FRUIT OR VEGETABLES INTO SEGMENTS**
MASCHINE ZUM SCHNEIDEN VON OBST ODER GEMÜSE IN SEGMENTE
MACHINE DESTINÉE À COUPER DES FRUITS OU DES LÉGUMES EN SEGMENTS

(30) Priority: 16.03.2017 IT 201700029195
(43) Date of publication of application: 03.10.2018
(73) Proprietor: A.B.L. S.R.L., 41032 Cavezzo (MO) (IT)
(72) Inventor: ASCARI, Luca, 41032 CAVEZZO (IT); ASCARI, Carlo, 41032 CAVEZZO (IT)
(74) Representative: Casadei, Giovanni

(56) References cited:
- CN-U- 205 852 869
- DE-A1-102004 002 070
- US-A1- 2009 193 952

## Description

The subject matter of the present invention is a machine for cutting fruit or vegetables into segments.

The machine according to the present invention can be used for cutting round fruits, e.g. apples, apricots and peaches, into segments, but not exclusively.

The machines currently available substantially comprise a group of blades arranged radially according to the number of segments to be obtained. In a central position with respect to the radial blades, a tubular blade is also arranged, intended to remove the central part of the fruit containing the core or the stones.

The blade group described above is located on an opening through which the cut segments and the part removed by the tubular blade fall. The cut is obtained by means of an upper presser which, by performing a predefined stroke in the downwards direction, presses the fruit onto the blades so that they cross it completely. For that purpose, the upper presser has a series of radial notches that copy the arrangement of the radial blades and are intended to be inserted on the latter to push the fruit through the blades.

In the machines currently available the upper presser is substantially a rigid body that applies pressure on the fruit that must be sufficient to allow the entire fruit to be cut, including the central part which, normally, requires greater pressure with respect to the others, due to the presence of the core and/or the stone. The parts surrounding the central part of the fruit are therefore subject to greater pressure than that which is effectively required, and are often damaged or bruised unacceptably, quickly turning black. This compromises the quality and the shelf-life of the segments obtained.

The publication US 2009/0193952 A1 discloses a machine according to the preamble of claim 1. The aim of the present invention is to provide a machine which enables the drawbacks of the currently available machines to be obviated.

An advantage of the machine according to the present invention is that it drastically reduces the pressure exerted on the zones surrounding the central part of the fruit, preventing damage and deterioration thereto.

Another advantage of the machine according to the present invention is that it allows any incorrect positioning of the fruit or a decentred position of the stone to be detected, preventing any damage to the blades.

Further characteristics and advantages of the present invention will become more apparent in the following detailed description of an embodiment of the present invention, illustrated by way of non-limiting example in the attached figures, in which:
- figure 1 shows an axonometric view of the machine according to the present invention;

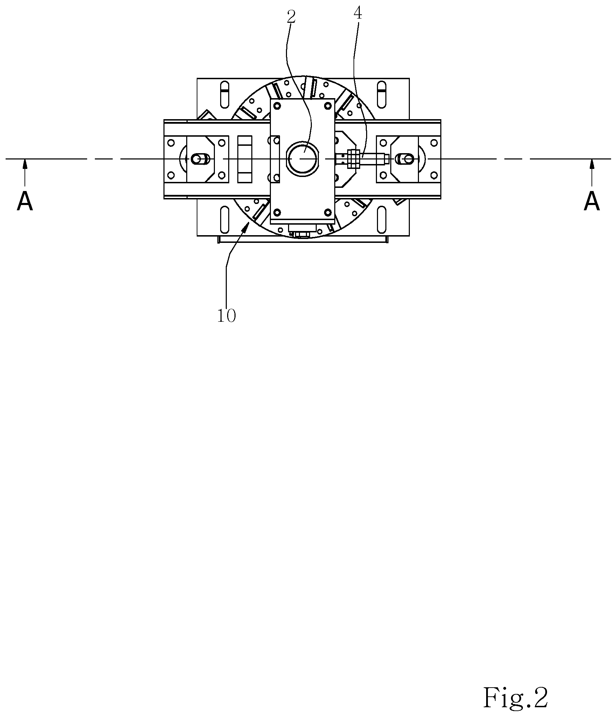

- figure 2 illustrates a view from above of the machine of figure 1;

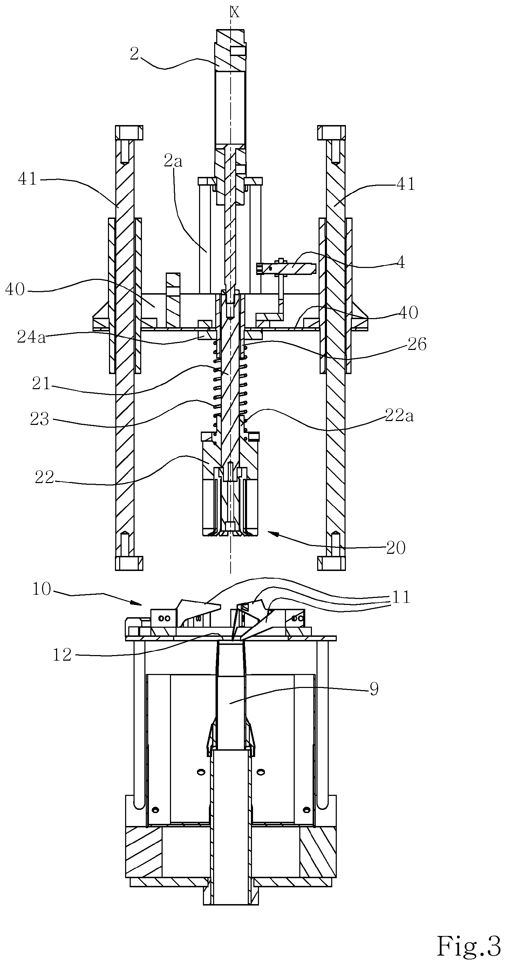

- figure 3 shows a sectional view taken along line A-A of figure 2.

The machine according to the present invention comprises a blade group (10), structured to perform the cutting of the product into segments and to remove a central portion thereof. For that purpose, at least one of the blades (11) is arranged with a radial orientation with respect to a central axis (X). A tubular blade (12) is also arranged concentrically to the central axis (X) for removing the central portion of the product.

With reference to the positioning of the machine in which the central axis (X) is vertical, the blades (10) are arranged above an opening through which the segments of fruit fall. The tubular blade is instead connected to a separate channel (9) that leads the central portion of the fruit towards a separate destination from the segments.

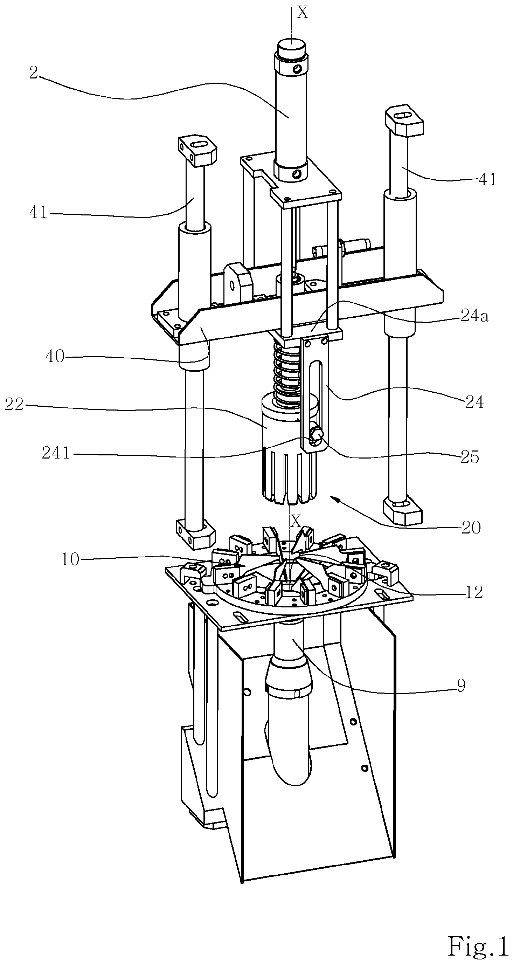

As shown in figure 1, the radial blades (11) are arranged with the sharp part facing upwards. Each sharp part is also tilted downwards in the direction of the central axis (X). The tilt of the sharp parts may be different among the various blades. For example, in the solution shown, some radial blades (11) with a lesser tilt are alternating with other radial blades (11) with a greater tilt. This allows the cutting of the segments to be more gradual, reducing the pressure necessary for making the cut.

A presser (20) is arranged above the blade group (10) and is mobile forwards and backwards according to an operating stroke. During the forward stroke the presser (20) pushes the product through the blades (10). The operating stroke of the presser (20) extends between an initial position and a final position. In relation to the vertical orientation shown in the figures, the initial position of the presser (2) is higher than the final position. While the presser (20) is in the initial or higher position, a product can be arranged resting on the blades (10), through a manipulator not shown in the figures. From the upper position the presser (20) descends towards the final or lower position, pushing the product against the blades (10) which perform the cut thereof.

A motor means (not illustrated as known to a person skilled in the art) is connected to the presser (20) for activating it along the operating stroke thereof. For example, the motor means comprises one or more pneumatic cylinders.

Preferably, but not necessarily, the presser (20) is associated with a mobile structure (40) comprising, for example, a cross member being slidable along guides (41) which, in the embodiment shown, are oriented vertically. The mobile structure (40) can translate along the guides (41) by means of the motor means not illustrated.

In the machine according to the present invention, the presser (20) comprises a central body (21), connected to the motor means through the mobile structure (40). The central body (21) is concentric to the central axis (X) and is intended to exert a thrust on the central zone of the product. In the lower position of the presser (20), the central body (21) is arranged in proximity to the tubular blade (12) or is partially inserted therein.

The presser (20) further comprises a peripheral body (22), arranged concentrically to the central body (21). In substance, the peripheral body (22) surrounds the central body (22), so as to come into contact with the peripheral part of the product, i.e. the part which is external to the central part. The function of the peripheral body (22) is substantially that of pushing onto the blades (10) the peripheral part of the product, i.e. the external part to the central part.

For that purpose, the peripheral body (22) is equipped with a plurality of radial notches, intended to be inserted on the radial blades (11). In this way, the portions of the peripheral body (22) that can be found between the radial notches can slide between the radial blades (11), also to push the product completely through the radial blades (11).

The peripheral body (22) is deconstrained with respect to the central body (21), i.e. the peripheral body (22) is not rigidly connected to the central body (21). This means that the thrust exerted by the central body (21) on the central part of the product is not transferred directly to the external part of the product, rather it can be transmitted indirectly and, for example, in a gradual or reduced manner.

In substance, a larger force, sufficient to remove the core or the stone from the product, can be transmitted to the central part of the product by means of the central body (21). A smaller force can, instead, be transmitted to the external part of the product, by means of the peripheral body (22). In this way, the external part of the product, i.e. the part intended to be transformed into segments, can be subject to a significantly lower pressure with respect to what happens in currently available machines.

In the embodiment shown, the peripheral body (22) is mobile relative to the central body (21) between an advanced position and a retracted position. In the advanced position the peripheral body (22) and the central body (21) are in a rest configuration which precedes contact with the product. For example, in the advanced position the central body (21) is arranged with its lower end aligned or near to a lower end of the peripheral body (22).

When the presser (20) comes into contact with the product, the central body (21), which is connected to the motor means through the mobile structure (40), substantially performs the same stroke as the mobile structure (40). The peripheral body (22), which is deconstrained from the central body (21), slows down or halts in contact with the product, at least in an initial step of the descent of the presser (20), assuming its retracted position, thus reducing the thrust exerted on the part of product with which it comes into contact. In the embodiment shown, when the peripheral body (22) is in its retracted position the central body (21) is projected further downwards with respect to the peripheral body (22).

A pusher means (23) is provided to act on the peripheral body (22) and to push it towards the advanced position. In the embodiment represented, the pusher means (23) pushes the peripheral body (22) downwards. The thrust exerted by the means (23) may be adjusted to an intensity sufficient to allow the external part of the product to be cut into segments. Such intensity, as already underlined, is substantially lower than the intensity required for cutting the central part of the product, which is transmitted to the central body (21) by the motor means.

Preferably the pusher means (23) comprises an elastic means or a spring, e.g. operating under pressure. The use of an elastic means allows the thrust on the peripheral body (22) to be adjusted, also in relation to the shortening or lengthening imposed on the elastic means itself.

In the embodiment represented, the pusher means (23) is interposed between the peripheral body (22) and the central body (21). In this way, the thrust transmitted by the motor means to the central body (21) is also transmitted to the peripheral body (22), and is mediated by the action of the pusher means (23).

In particular, in the solution represented the elastic pusher means (23) begins to be compressed once the peripheral body (22) descending downwards together with the central body (21), comes into contact with the product. The force transmitted to the peripheral body (22) is therefore initially lower, and increases as the stroke of the central body (21) progresses downwards, which produces the gradual compression of the pusher means (23). The force transmitted to the peripheral body (22) increases gradually until it reaches a sufficient intensity for cutting the product. Once such intensity has been reached, significantly lower than the force transmitted by the motor means to the central body (21), the peripheral body (22) begins to descend downwards, pushing the product along the blades (10). Due to the presence of the elastic pusher means (23), the force transmitted by the motor means to the peripheral body (22), and therefore to the product, will oscillate in an interval determined by the force required to perform the cut of the product on the blades (10).

In the embodiment shown, the peripheral body (22) is slidable relative to the central body (21) along the central axis (X). Preferably, the central body (21) is associated with a guide (24). In particular, such guide (24) is solidly constrained to a plate (24a) in turn associated with the central body (21). The peripheral body (22) comprises an appendage (25) that is slidable along the guide (24) so as to enable the relative sliding between the peripheral body (22) and the central body (21). The appendage (25) is for example in the form of a stem that projects laterally to the peripheral body (22) along a radial direction.

The guide (24) is provided with an end stop (241) that defines the first position of the peripheral body (22). Preferably, the guide (24) comprises at least a first end (241) with which the appendage (25) goes into contact in the first position of the peripheral body (22), as shown in figure 1. In substance, due to the effect of the action of the pusher means (23), the peripheral body (22) is arranged in the first position, i.e. with the appendage (25) in contact with the first end (241) of the guide (24).

In the embodiment represented, the pusher means (23) of the elastic type comprises a spring, interposed between the peripheral body (22) and the mobile structure (40). In particular, the spring (23) is compressed between a shank (22a) of the peripheral body (22) and a bushing (26) solidly constrained to the mobile structure (40). The shank (22a) and the bushing (26) are structured to maintain the spring (23) concentric to the central axis (X).

The machine according to the present invention can be equipped with a safety means to prevent the central body (21) being subjected to a greater axial force than a predetermined value. The central body (21), in presence of the safety means, is elastically slidable relative to the mobile structure (40). For that purpose, the safety means comprises an elastic actuator (2), interposed between the mobile structure (40) and the central body (21) and provided to push the central body (21) downwards, or however in the advancement direction of the stroke in which the product is cut. For example, the elastic actuator (2) comprises a pneumatic cylinder whose stem is connected to the central body (21). A control module for controlling the machine, e.g. an electronic processor, adjusts the pressure present inside the cylinder so that the latter exerts a predetermined force on the central body (21). The elastic actuator (2) is connected to the mobile structure (40) by means of a frame (2a).

A detector (4), which sends its signal to the machine's control module, is predisposed for detecting the position of the central body (21) relative to structure mobile (40). For that purpose, the detector (4) is solidly constrained to the mobile structure (40).

The machine's control module is equipped with a control algorithm which, in the case where the signal of the detector (4) indicates a determined position of the central body (21), halts the functioning of the motor means.

For example, the detector (4) may be located so as to detect the excessive retraction of the central body (21) relative to the mobile structure (40) during the descent, i.e. a displacement that exceeds a predetermined threshold value. Such excessive displacement can occur in the case where the stone of the product is in a decentred position and is not completely arranged inside the tubular blade (12). In this circumstance, the stone is interposed between the tubular blade (12) and the central body (21), transmitting a force both to the tubular blade (12) and to the central body (21). If such force exceeds the force transmitted by the elastic actuator (2) to the central body (21), the latter stops, while the mobile structure (40) continues its stroke. In that case, the detector (4) identifies the halt of the central body (21), i.e. it detects the relative displacement between the central body (21) and the mobile structure (40), and sends a corresponding signal to the control module which halts the motor means, thus preventing any possible damage to the tubular blade (12) and/or the central body (21).

Advantageously, two or more machines according to the present invention can be placed adjacent to each other along an alignment direction, in order to be able to work simultaneously on several products.

## Claims

1. A machine for cutting fruit or vegetables into segments, comprising:
a blade group (10);
a presser (20) arranged above the blade group (10) and mobile according to an operating stroke along which it pushes a product (P) in advancement through the blades (10);
motor means, connected to the presser (20) by means of a mobile structure (40), predisposed for activating along an operating stroke thereof;
**characterised in that** the presser (20) comprises:
a central body (21), rigidly connected to the motor means;
a peripheral body (22), arranged concentrically to the central body (21) and deconstrained from the central body (21).

2. The machine according to claim 1, wherein the peripheral body (22) is mobile relative to the central body (21) between an advanced position and a retracted position.

3. The machine according to claim 2, comprising pusher means (23) acting on the peripheral body (22) for pushing the peripheral body (22) towards the advanced position.

4. The machine according to claim 3, wherein the pusher means (23) comprise an elastic means.

5. The machine according to claim 3, wherein the pusher means (23) are interposed between the mobile structure (40) and the central body (21).

6. The machine according to claim 1, wherein: the central body (21) is solidly constrained to a guide (24); the peripheral body (22) comprises an appendage (25) that is slidable along the guide (24) so as to enable the relative sliding between the peripheral body (22) and the central body (21) along a predetermined sliding direction.

7. The machine according to claim 6, wherein the guide (24) comprises at least a first end (241) with which the appendage (25) goes into contact in the first end position of the peripheral body (22).

8. The machine according to claim 1, wherein the central body (21) is elastically mobile relative to the mobile structure (40), and wherein a detector (4) is predisposed for detecting the position of the central body (21) relative to structure mobile (40).

9. The machine according to claim 8, comprising a control module, destined to control the functioning of the motor means, which control module receives the signal of the detector (4) in input and, in a case where the signal of the detector (4) indicates a determined position of the central body (21) with respect to the mobile structure (40), halts the functioning of the motor means.

10. The machine according to claim 1, wherein the central body (21) and the peripheral body (22) are mobile along a central axis (X).

## Patentansprüche

1. Maschine zum Schneiden von Obst oder Gemüse in Segmente, umfassend:
eine Messergruppe (10);
einen Drücker (20), der über der Messergruppe (10) angeordnet und entsprechend einem Arbeitshub beweglich ist, entlang dem er ein Produkt (P) durch Vorschieben durch die Messer (10) drückt;
Motormittel, die mittels einer beweglichen Struktur (40) mit dem Drücker (20) verbunden sind und dazu vorgesehen sind, um ihn entlang dessen Arbeitshubs zu aktivieren;
**dadurch gekennzeichnet, dass** der Drücker (20) umfasst:
einen Zentralkörper (21), der starr mit den Motormitteln verbunden ist;
einen Umfangskörper (22), der konzentrisch zum Zentralkörper (21) angeordnet und vom Zentralkörper (21) entlastet ist.

2. Maschine nach Anspruch 1, wobei der Umfangskörper (22) relativ zu dem Zentralkörper (21) zwischen einer vorgeschobenen Position und einer zurückgezogenen Position beweglich ist.

3. Maschine nach Anspruch 2, umfassend Drückermittel (23), die auf den Umfangskörper (22) einwirken, um den Umfangskörper (22) hinführend zur vorgeschobenen Position zu drücken.

4. Maschine nach Anspruch 3, wobei die Drückermittel (23) ein elastisches Mittel umfassen.

5. Maschine nach Anspruch 3, wobei die Drückermittel (23) zwischen der beweglichen Struktur (40) und dem Zentralkörper (21) angeordnet sind.

6. Maschine nach Anspruch 1, wobei: der Zentralkörper (21) an eine Führung (24) festgespannt ist; der Umfangskörper (22) einen Ansatz (25) umfasst, der entlang der Führung (24) verschiebbar ist, um das relative Gleiten zwischen dem Umfangskörper (22) und dem Zentralkörper (21) entlang einer vorbestimmten Gleitrichtung zu ermöglichen.

7. Maschine nach Anspruch 6, wobei die Führung (24) mindestens ein erstes Ende (241) umfasst, mit dem der Ansatz (25) in der ersten Endposition des Umfangskörpers (22) in Kontakt kommt.

8. Maschine nach Anspruch 1, wobei der Zentralkörper (21) relativ zu der beweglichen Struktur (40) elastisch beweglich ist und wobei ein Detektor (4) zum Erfassen der Position des Zentralkörpers (21) relativ zu der beweglichen Struktur (40) vorgesehen ist.

9. Maschine nach Anspruch 8, umfassend ein Steuermodul, das ausgelegt ist, um den Betrieb der Motormittel zu steuern, wobei das Steuermodul das Signal des Detektors (4) als Eingabe empfängt und in einem Fall, in dem das Signal des Detektors (4) eine bestimmte Position des Zentralkörpers (21) in Bezug auf die bewegliche Struktur (40) angibt, stoppt es den Betrieb der Motormittel.

10. Maschine nach Anspruch 1, wobei der Zentralkörper (21) und der Umfangskörper (22) entlang einer Mittelachse (X) beweglich sind.

## Revendications

1. Machine destinée à couper des fruits ou des légumes en segments, comprenant :
un groupe de lames (10) ;
un presseur (20) disposé au-dessus du groupe de lames (10) et mobile selon une course de travail le long de laquelle il pousse un produit (P) en progression à travers les lames (10) ;
des moyens motorisés, reliés au presseur (20) au moyen d'une structure mobile (40), prédisposés pour l'actionner le long de sa course de travail ;
**caractérisée en ce que** ledit presseur (20) comprend :
un corps central (21), relié rigidement aux moyens motorisés ;
un corps périphérique (22) disposé concentriquement au corps central (21) et désolidarisé du corps central (21).

2. Machine selon la revendication 1, dans laquelle le corps périphérique (22) est mobile par rapport au corps central (21) entre une position avancée et une position rétractée.

3. Machine selon la revendication 2, comprenant des moyens poussoirs (23) agissant sur le corps périphérique (22) pour pousser le corps périphérique (22) vers la position avancée.

4. Machine selon la revendication 3, dans laquelle les moyens poussoirs (23) comprennent un moyen élastique.

5. Machine selon la revendication 3, dans laquelle les moyens poussoirs (23) sont interposés entre la structure mobile (40) et le corps central (21).

6. Machine selon la revendication 1, dans laquelle le corps central (21) est solidaire d'un guide (24) ; le corps périphérique (22) comprend un appendice (25) pouvant coulisser le long du guide (24) de sorte à permettre le coulissement relatif entre le corps périphérique (22) et le corps central (21) le long d'une direction de coulissement prédéterminée.

7. Machine selon la revendication 6, dans laquelle le guide (24) comprend au moins une première extrémité (241) avec laquelle l'appendice (25) se met en contact dans la première position d'extrémité du corps périphérique (22).

8. Machine selon la revendication 1, dans laquelle le corps central (21) est mobile élastiquement par rapport à la structure mobile (40), et dans laquelle un détecteur (4) est prédisposé pour détecter la position du corps central (21) par rapport à la structure mobile (40).

9. Machine selon la revendication 8, comprenant un module de contrôle destiné à contrôler le fonctionnement des moyens motorisés, ledit module de contrôle reçoit le signal du détecteur (4) en entrée et, au cas où le signal du détecteur (4) indique une position déterminée du corps central (21) par rapport à la structure mobile (40), arrête le fonctionnement des moyens motorisés.

10. Machine selon la revendication 1, dans laquelle le corps central (21) et le corps périphérique (22) sont mobiles le long d'un axe central (X).
